# DEMANDE DE BREVET EUROPEEN

(11) **EP 0 707 789 A1**
(43) Date de publication de la demande: **24.04.1996**
(21) Numéro de dépôt: 95420287.5
(22) Date de dépôt: 18.10.1995
(51) Int. Cl.: A01K 3/00

(54) **Filet d'enclos pour animaux, procédé et dispositif de fabrication d'un tel filet**

(30) Priorité: 18.10.1994 FR 9412649
(71) Demandeur: Auvergne Rhone-Alpes - ARA, F-01480 Savigneux (FR); Bellon, Catherine, F-01480 Savigneux (FR); BELLON, Jean-Michel, F-01480 Ars-sur-Formans (FR)
(72) Inventeur: Bellon, Catherine, F-01480 Savigneux (FR); Bellon, Jean-Michel, F-01480 Ars Sur Formans (FR)
(74) Mandataire: Vuillermoz, Bruno

(57) **Abrégé**

Filet d'enclos pour animaux comprenant :
- des fils de chaîne (2) horizontaux, intégrant au moins un fil (7) conducteur de l'électricité, lesdits fils (2) étant espacés à intervalles réguliers ou non,
- des fils de trame (1), verticaux non conducteurs de l'électricité, également espacés les uns des autres, et solidarisés aux fils de chaîne (2) au niveau de leur intersection (6) avec ceux-ci, de telle sorte à définir des mailles carrées ou rectangulaires,

***caractérisé*** en ce que la solidarisation des fils de chaîne (2) aux fils de trame (1) est réalisée au niveau de chacun des points d'intersection (6), au moyen d'un ensemble de deux bandes (3,4) ou feuilles en matière plastique, solidarisées entre elles de part et d'autre desdits points d'intersection.

## Description

### Domaine technique

L'invention concerne un nouveau type de filets d'enclos pour animaux. Elle vise également un procédé et un dispositif de fabrication de ce type de filet.

### Art antérieur

De plus en plus fréquemment, les enclos pour animaux sont entourés d'une clôture électrique, destinée à empêcher les animaux de sortir de l'enclos, et, corrollairement, de protèger les animaux contre d'éventuels prédateurs venus de l'extérieur. De fait, et pour certains animaux, tels que les moutons, chèvres, porcs, volailles, ces clôtures se présentent sous la forme d'un filet, comportant des mailles sur toute leur surface. Ces filets sont soit réalisés en un matériau conducteur électrique, et reliés à une source d'énergie électrique, déstinée à fournir une impulsion de tension, soit réalisés en un matériau synthétique, notamment en polyéthylène, sous forme de cordelette retordue, et dont les fils horizontaux intègrent un conducteur électrique également reliés à une telle source. De la sorte, en cas de contact avec le filet, les animaux reçoivent un choc bref, qui sans risquer d'altérer leur santé, les surprend et les éloigne de cette clôture.

De manière connue, les fils horizontaux de ces filets sont appelés fils de chaîne, et les fils verticaux sont appelés fils de trame, ceux-ci reliant l'ensemble des fils de chaînes pour ainsi constituer des mailles de forme carrée ou rectangulaire. De manière très répandue, ces filets sont réalisés par nouage des fils de trame au moyen des fils de chaîne. Mais, on observe que les noeuds réalisés au niveau des fils de chaîne, donc au niveau des fils intégrant le ou les fils conducteurs, induisent fréquemment la rupture desdits fils conducteurs, et partant le dysfonctionnement de la clôture.

Pour éviter de réaliser des noeuds sur les conducteurs, on a proposé de solidariser les fils de chaîne aux fils de trame, par l'injection de billes de matière plastique et notamment de polyéthylène au niveau des points d'intersection. Cette solution résout le problème de courbures des fils conducteurs, mais nécessite l'investissement d'une machine à injecter sophistiquée. En outre et surtout, l'injection de matière plastique s'effectue à une température voisine de la température de fusion des fils support en matière plastique constituant le filet. Il s'ensuit que les propriétés des fils, et notamment leur résistance mécanique est au moins partiellement altérée lors de la fabrication du filet. Outre cet inconvénient technique, les vitesses de production de telles machines sont très faibles, et notamment de l'ordre de 1,2 m/mn pour un filet de maille moyenne, diminuant la productivité, et partant, augmentant les coûts de fabrication.

### Exposé de l'invention

L'objet de l'invention est de pallier ces différents inconvénients.

Elle vise un procédé de fabrication de filets, qui soit facile à mettre en oeuvre, permette d'augmenter significativement les vitesses de production, et conserve les propriétés, notamment mécaniques des différents fils constituant le filet.

Ce procédé pour la fabrication d'un filet d'enclos pour animaux, comportant des mailles définies par l'intersection de fils de chaînes horizontaux, intégrant des fils conducteurs de l'électricité, et de fils de trame verticaux, se caractérise en ce que la solidarisation des fils de chaîne aux fils de trame s'effectue, après mise en place simultanée de part et d'autre de chacun des points d'intersection d'un même fil de trame avec les fils de chaîne, d'une bande ou feuille en matière plastique, par soudure au niveau de chacun desdits points d'intersection des deux bandes ou feuilles de matière plastique.

En d'autres termes, chaque point d'intersection est entouré de deux feuilles ou bandes de matière plastique, qui sont soudées entre elles de manière à envelopper ledit point d'intersection et maintenir fermement les fil de trame au niveau du fil de chaîne correspondant.

Avantageusement, en pratique
- après la soudure des feuilles ou bandes de matière plastique, les zones desdites bandes ou feuilles extérieures à la soudure sont éliminées, notamment par découpe ;
- la soudure des bandes ou feuilles de matière plastique est réalisée par ultra-sons ;

Dans une variante, les deux feuilles ou bandes de matière plastique solidarisant chaque point d'intersection d'un fil de trame à chacun des fils de chaîne sont constituées par une seule feuille ou bande pliée en deux, dont les deux moitiés sont placées de chaque coté du point d'intersection considéré.

L'invention vise également les filets obtenus notamment par le procédé ci-dessus, à savoir un filet d'enclos pour animaux comprenant :
- des fils de chaîne horizontaux, intégrant au moins un fil conducteur de l'électricité, lesdits fils étant espacés à intervalles réguliers ou non,
- des fils de trame, verticaux non conducteurs de l'électricité, également espacés les uns des autres, et solidarisés aux fils de chaîne au niveau de leur intersection avec ceux-ci, de telle sorte à définir des mailles carrées ou rectangulaires.

Ce filet se caractérise en ce que la solidarisation des fils de chaîne aux fils de trame est réalisée au niveau de chacun des points d'intersection, au moyen d'un ensemble de deux bandes ou feuilles en matière plastique, solidarisées entre elles de part et d'autre desdits points d'intersection.

Avantageusement, en pratique :
- lesdites feuilles ou bandes en matière plastique sont soudées entre elles sur les faces en regard et ne sont pas soudées aux fils de trame et aux fils de chaîne ;
- les feuilles ou bandes de matière plastique sont réalisées en polyéthylène haute densité, notamment pour mieux résister aux ultraviolets et aux intempéries et présenter une certaine rigidité, ce qui facilite l'opération de soudure.

L'invention vise enfin un dispositif permettant la fabrication de tels filets. Ce dispositif comprend :
- un organe d'alimentation et de mise en parallèle simultanée des fils de chaîne,
- un organe de pose consécutive des fils de trame perpendiculairement aux fils de chaine ainsi mis en place,
- un pluralité d'organes d'amenée de feuilles ou bandes en matière plastique au dessus et au dessous de chacun des points de contact et d'intersection d'un fil de trame avec les fils de chaine,
- un organe de soudure entre des feuilles ou bandes de matière plastique au niveau de chacun desdits points de contact et d'intersection,
- un organe de découpe des portions des feuilles ou bandes extérieures à la solidarisation des fils de chaine et de trame.

De manière préférée, l'organe de soudure des feuilles ou bandes de matière plastique est constitué par une rampe d'électrodes reliées à un dispositif générateur d'ultra-sons, et placées au dessus de tous les points de contact et d'intersection d'un même fil de trame avec les fils de chaine, laquelle rampe, à chaque étape de soudure, se déplace verticalement jusqu'à venir au contact d'une rampe complémentaire située au dessous du fil de trame, et comportant des enclumes situées en dessous desdits points d'intersection et de contact, et destinées à coopérer avec lesdites électrodes.

Avantageusement, en pratique, le dispositif comporte également :
- des moyens de renvidage du filet ainsi fabriqué ;
- des moyens de découpe du filet fabriqué en tronçons de longueur déterminée.

### Description sommaire des dessins

La manière dont l'invention peut être réalisée et les avantages qui en découlent ressortiront mieux de l'exemple de réalisation qui suit, donné à titre indicatif et non limitatif à l'appui des figures annexées.

La figure 1 est une vue schématique de dessus d'une intersection d'un fil de trame et d'un fil de chaine enveloppée de deux feuilles de matière plastique.

La figure 2 est une coupe en épaisseur d'une zone d'intersection.

La figure 3 est une vue en perspective d'une intersection solidarisée.

### Mode de réalisation de l'invention

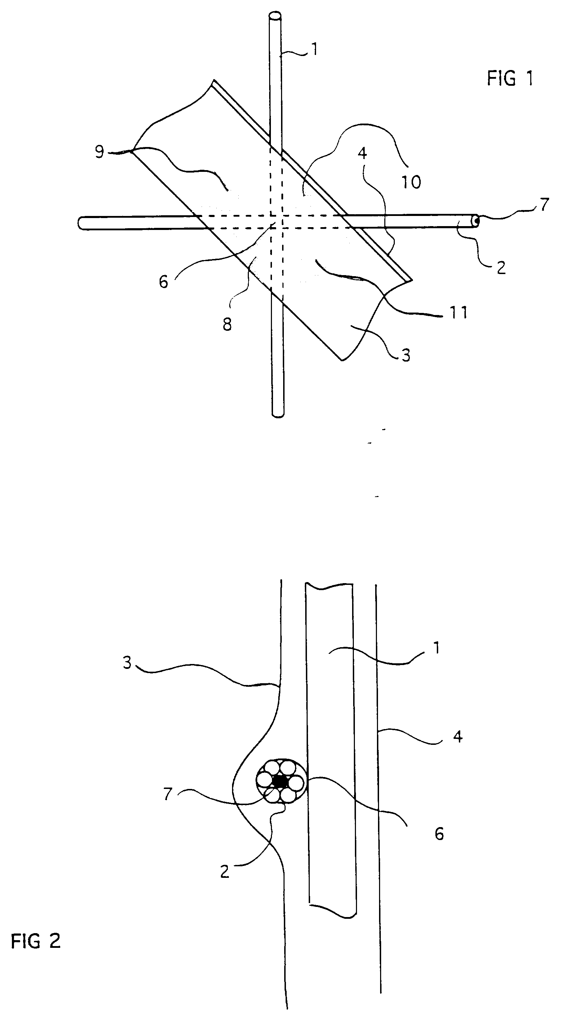

Comme représenté aux figures 1 et 2, chaque intersection (6) du filet est constituée d'un fil de chaîne (2), réalisé sous la forme d'une cordelette en polyéthylène retordue et intégrant un fil conducteur métallique (7), et d'un fil de trame (1), également réalisé sous la forme d'une telle cordelette, mais exempte de tout conducteur. Dans une forme pratique, les deux cordelettes (1,2) ont environ 3mm de diamètre.

Au niveau de l'intersection, selon le procédé de l'invention, on place une bandelette (3,4) de matière plastique, typiquement du polyéthylène haute densité, qui enveloppe le point de contact (6). Les feuilles de matière plastique (3, 4), typiquement de 0,7mm d'épaisseur, de forme rectangulaire de 12x20mm de coté, sont placées à 45° par rapport à l'orientation des fils et de part et d'autre de ces fils.

Après le positionnement des deux bandes (3,4), celles-ci sont assemblées par soudure, prenant par exemple la forme d'un rectangle dont chaque coté est orienté à 45° par rapport aux fils du filet. La soudure s'effectue seulement sur les parties (8,9,10,11) de film en regard, sans toucher les cordelettes (2,3), ce qui leur conserve toutes leurs propriétés mécaniques.

La soudure se fait avantageusement par ultra-sons, ce qui permet d'opérer sous faible pression, donc sans induire une quelconque dégradation des fils, et par ailleurs d'opérer rapidement. Après soudure, les feuilles de matière plastique ne forment qu'une seule feuille qui emprisonne le point de contact (6). En outre, les portions de feuille de matière plastique au contact des fils (1, 2) sont légèrement soudées aux fils, ce qui confère une résistance supplémentaire à l'assemblage, notamment contre le démaillage.

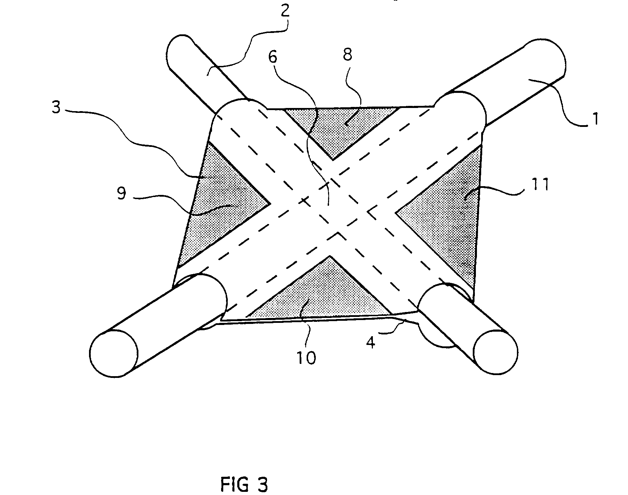

Après réalisation de l'assemblage, on procède à la découpe des parties des feuilles plastiques qui sont extérieures à la soudure. Ainsi, on obtient, comme représenté en figure 3, une intersection ayant une résistance à l'arrachement supérieure à la résistance moyenne de chaque fil pris séparément.

Un dispositif pour fabriquer un tel filet selon l'invention comprend quatre zones remplissant chacune une fonction définie.

Une première zone est chargée d'assurer l'alimentation parallèle en fils de chaîne.

Une deuxième zone permet l'assemblage des fils de trame (1) avec les fils de chaîne (2). Un organe pose un fil (1) perpendiculairement à l'ensemble de fils de chaîne (2) et pose deux bandes (3,4) de matière plastique en dessous et en dessus de chaque intersection. Ensuite, une rampe d'électrodes vient se poser au niveau de chacune des intersections (6) et coopère à ce niveau avec une rampe d'enclumes, placées sous les intersections et qui coopèrent avec les électrodes pour assurer le maintien des fils et des feuilles (3,4) de matière plastique par un effort minimal, et qui en outre assure la soudure, par effet thermique. La rampe est connectée à un générateur d'ultra-sons qui constitue la source d'énergie nécessaire à la soudure.

Un exemple de réalisation d'une électrode comprend des zones planes qui correspondent aux surfaces de matière plastique à souder, ainsi que les canaux évitant la compression des fils (1,2) lors de la soudure.

Une troisième zone du dispositif réalise la découpe des feuilles plastique à l'extérieur des soudures (8,9,10,11) de manière à obtenir un élément de solidarisation homogène et ayant l'apparence d'une seule feuille. Cette zone comprend des organes d'entrainement et de renvidage.

Enfin, une dernière zone assure les fonctions classiques de coupe du filet à la longueur voulue ainsi que le renvidage.

Il apparaît à la description de l'invention que ce nouveau procédé de réalisation de filet pour enclos présente de nombreux avantages par rapport à la technique existante, parmi lesquels on peut citer :
- d'une part, contrairement aux techniques par injection ou nouages, le fait que les fils ne sont ni tordus ni chauffés pendant la réalisation, ce qui permet de conserver leurs propriétés électriques et mécaniques ;
- d'autre part, à l'opposé des machines à injection, le fait que le dispositif de fabrication est beaucoup plus simple à mettre en oeuvre et représente un investissement nettement moindre ;
- enfin et surtout, le fait que les cadences de productions sont beaucoup plus élevées, typiquement multipliées par cinq, voire plus.

## Revendications

1. Procédé pour la fabrication d'un filet d'enclos pour animaux, comportant des mailles définies par l'intersection de fils de chaînes (2) horizontaux, intégrant des fils conducteurs (7) de l'électricité, et de fils de trame verticaux (1), ***caractérisé*** en ce que la solidarisation des fils de chaîne (2) aux fils de trame (1) s'effectue, après mise en place simultanée de part et d'autre de chacun des points d'intersection (6) d'un même fil de trame (1) avec les fils de chaîne (2), d'une bande (3,4) ou feuille en matière plastique, par soudure au niveau de chacun desdits points d'intersection (6) des deux bandes ou feuilles de matière plastique.

2. Procédé pour la fabrication d'un filet d'enclos pour animaux selon la revendication 1, ***caractérisé*** en ce qu'après la soudure des feuilles (3,4) ou bandes de matière plastique, les zones desdites bandes ou feuilles extérieures à la soudure (8,9,10,11) sont éliminées, notamment par découpe.

3. Procéde pour la fabrication d'un filet d'enclos pour animaux selon l'une des revendications 1 ou 2, ***caractérisé*** en ce que la soudure des bandes ou feuilles de matière plastique est réalisées par ultra-sons.

4. Filet d'enclos pour animaux comprenant :
- des fils de chaîne (2) horizontaux, intégrant au moins un fil (7) conducteur de l'électricité, lesdits fils (2) étant espacés à intervalles réguliers ou non,
- des fils de trame (1), verticaux non conducteurs de l'électricité, également espacés les uns des autres, et solidarisés aux fils de chaîne (2) au niveau de leur intersection (6) avec ceux-ci, de telle sorte à définir des mailles carrées ou rectangulaires,
***caractérisé*** en ce que la solidarisation des fils de chaîne (2) aux fils de trame (1) est réalisée au niveau de chacun des points d'intersection (6), au moyen d'un ensemble de deux bandes (3,4) ou feuilles en matière plastique, solidarisées entre elles de part et d'autre desdits points d'intersection.

5. Filet d'enclos pour animaux selon la revendication 4, ***caractérisé*** en ce que lesdites feuilles ou bandes (3,4) en matière plastique sont soudées entre elles sur les faces (8,9,10,11) en regard et ne sont pas soudées aux fils de trame (1) et aux fils de chaîne (2).

6. Filet d'enclos pour animaux selon l'une des revendications 4 et 5, ***caractérisé*** en ce que les feuilles ou bandes (3,4) de matière plastique sont en polyéthylène haute densité.

7. Dispositif pour la fabrication de filets d'enclos pour animaux comprenant :
- des fils de chaîne horizontaux (2), intégrant au moins un fil (7) conducteur de l'électricité, lesdits fils (2) étant espacés à intervalles réguliers ou non,
- des fils de trame (1), verticaux non conducteurs de l'électricité, également espacés les uns des autres, et solidarisés aux fils de chaîne (2) au niveau de leur intersection (6) avec ceux-ci, de telle sorte à définir des mailles carrées ou rectangulaires,
***caractérisé*** en ce qu'il comprend :
- un organe d'alimentation et de mise en parallèle simultanée des fils de chaîne (2),
- un organe de pose des fils de trame (1) perpendiculairement aux fils de chaine (2) ainsi mis en place,
- un pluralité d'organes d'amenée et de dépose de feuilles (3,4) ou bandes en matière plastique au dessus et au dessous de chacun des points de contact et d'intersection (6) d'un fil de trame (1) avec les fils de chaine (2),
- un organe de soudure entre des feuilles ou bandes de matière plastique au niveau de chacun desdits points de contact et d'intersection (6),
- un organe de découpe des portions des feuilles (3,4) ou bandes extérieures à la solidarisation des fils de chaine et de trame.

8. Dispositif pour la fabrication de filets d'enclos pour animaux selon la revendication 7, ***caractérisé*** en ce que l'organe de soudure des feuilles ou bandes de matière plastique est constitué par une rampe d'électrodes reliées à un dispositif générateur d'ultra-sons, et placées au dessus de tous les points de contact et d'intersection d'un même fil de trame avec les fils de chaine, laquelle rampe, à chaque étape de soudure, se déplace verticalement jusqu'à venir au contact d'une rampe complémentaire située au dessous du fil de trame, et comportant des enclumes fixes situées en dessous desdits points d'intersection et de contact, et destinées à coopérer avec lesdites électrodes.

9. Dispositif pour la fabrication de filets d'enclos pour animaux selon l'une des revendications 7 ou 8, ***caractérisé*** en ce qu'il comporte également des moyens de renvidage du filet ainsi fabriqué.

10. Dispositif pour la fabrication de filets d'enclos pour animaux selon l'une des revendications 7 à 9, ***caractérisé*** en ce qu'il comporte également des moyens de découpe du filet fabriqué en tronçons de longueur déterminée.
